# EUROPEAN PATENT APPLICATION

(11) **EP 4 353 126 A1**
(43) Date of publication of application: **17.04.2024**
(21) Application number: 23202575.9
(22) Date of filing: 10.10.2023
(51) Int. Cl.: A47B 47/00, A47B 47/04, F16B 12/44, F16B 12/48, E04B 1/26

(54) **A MULTIFUNCTIONAL MODULE INTENDED FOR INTERIOR USE**

(30) Priority: 10.10.2022 SE 2251181
(71) Applicant: Ballingslöv AB, 281 87 Bällingslöv (SE)
(72) Inventor: Måns Ljungberg, 217 55 Malmö (SE)
(74) Representative: AWA Sweden AB

(57) **Abstract**

The present invention provides A multifunctional and detachable modular framing unit 1, said modular framing unit 1 comprising a framework 2 comprising a first joist 3, a second joist 4 and a third joist 5, wherein the first joist 3, second joist 4 and third joist 5 have joist holes 6, and wherein the modular framing unit 1 also comprises a corner fitting unit 70 enabling connection fastening of the first joist 3, second joist 4 and third joist 5 to each other, said corner fitting unit 70 comprising a main part 7, said main part 7 of the corner fitting unit 70 having a main body 11 comprising a corner fitting unit hole 80b for fixation of said main part 7 between the first joist 3 and second joist 4 by means of a screw 10b and a separate locking unit 12 intended to be inserted into a pre-drilled hole 13 of the second joist 4, preferably the separate locking unit 12 has a hole matching the screw 10b to be locked into the same, said main part 7 having at least one end fixation portion 9 directly connectable into the third joist 5, said fixation portion 9 comprising a dowel 8 matching a cut out hole 50 in the third joist 5 to enable connection with the first 3 and second joist 4.

## Description

### Filed of the invention

The present inventive concept relates to a multifunctional and detachable module, especially intended for interior use, such as in a furniture arrangement, e.g. for kitchen module arrangements. It should be noted that the multifunctional module according to the present invention may also be used in exterior applications, such as e.g. in a greenhouse or bicycle shed.

### Technical Background

Different forms of module based furniture arrangements have been disclosed in the past, such as DE102020120983 or WO13170955. These modules are based on the concept that the module comprises a plurality of adjustable and movable components which can be customized arranged based on the specific needs.

One of the problems with the already known concepts of this type is that the module systems consists of many different components which each have one or maximum two functions. Due to this, the mounting may be inconvenient, and the degree of re-utilization is very limited.

Furthermore, the aim with the systems existing today is that the customer is able to perform smaller adjustments to the set arrangement.

Because of the limited degree of reuse of the today known module based furniture arrangements, the environmental and sustainability aspect becomes problematic. In order to reduce the human carbon footprint as the world's population increases and to slow down the rate of our consumption of the earth's resources, it is necessary to shift to more sustainable solutions in our daily life. The change towards a circular economy is an important aspect and thus also products based on circular design.

The present invention is directed to providing a simple multifunctional and detachable modular framing unit comprising a few components with several functions, enabling for re-utilization to a higher degree than previously shown. The present invention provides a user-friendly and circular solution, with modularity that is easy to assemble and disassemble without affecting the modules condition. Thereby the invention enable easy re-use, repairing, updating and adaptivity which are all activities that support a circular economy. At the same time the user gets a unique and self-designed furniture arrangement.

### Summary of the invention

The stated purpose above is achieved by a multifunctional and detachable modular framing unit, said modular framing unit comprising a framework comprising a first joist, a second joist and a third joist, wherein the first joist, second joist and third joist have joist holes, and wherein the modular framing unit also comprises a corner fitting unit enabling connection fastening of the first joist, second joist and third joist to each other, said corner fitting unit comprising a main part, said main part of the corner fitting unit having a main body comprising a corner fitting unit hole for fixation of said main part between the first joist and second joist by means of a screw and a separate locking unit intended to be inserted into a pre-drilled hole of the second joist, preferably the separate locking unit has a hole matching the screw to be locked into the same, said main part having at least one end fixation portion directly connectable into the third joist, said fixation portion comprising a dowel matching a cut out hole in the third joist to enable connection with the first and second joist.

### Specific embodiments of the invention

Below some specific embodiments of the present invention are described further. Moreover, the present invention and aspects thereof are discussed in more detail.

According to one embodiment of the invention, the end fixation portion of the main part of the corner fitting unit may have a dowel with a cubic, cuboid, prism, pyramid, cone shape, or preferably cylindrical shape. A cylindrical shape or the like is suitable as this provides for a shape that both works when being fixated into a cut out hole or the like in another joist and also is possible to hold a hole in itself through the material. In line with this, according to one embodiment each dowel comprises a dowel corner fitting unit hole. This is also presented in the figures.

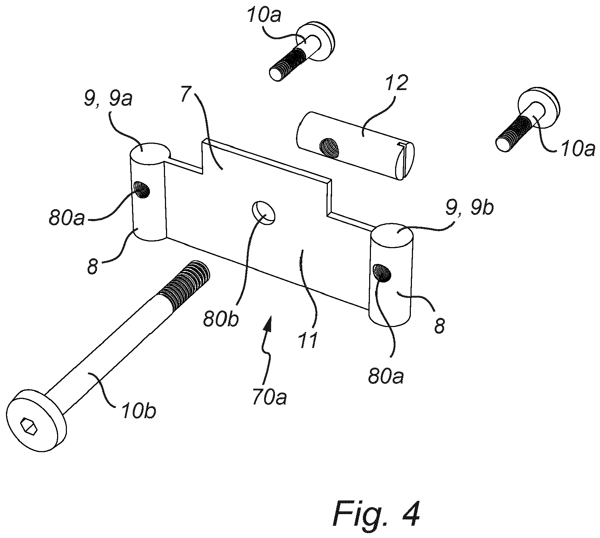

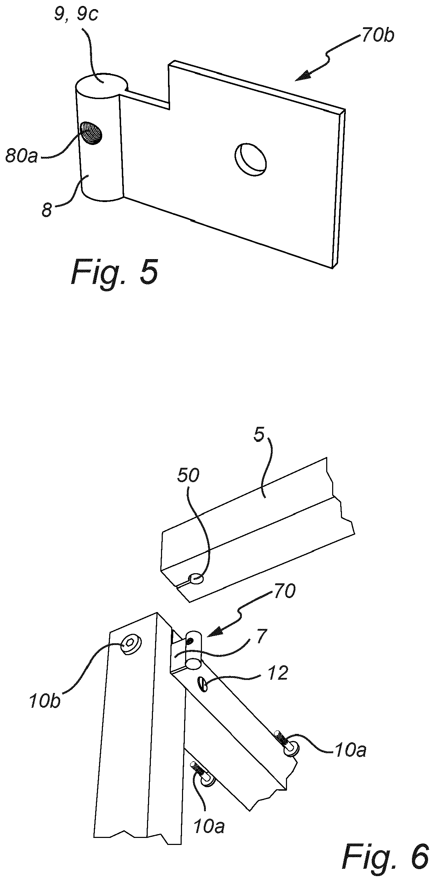

Therefore, according to the present invention, the dowel is suitable as a unit being fastened into a joist, and at the same time functions as a locking unit into which a screw may be fastened. This implies that a dowel according to the present invention has dual fastening function. Furthermore, the corner fitting unit according to the present invention may have one or two dowels depending on the type of corner fitting unit (see figs. 4 and 5).

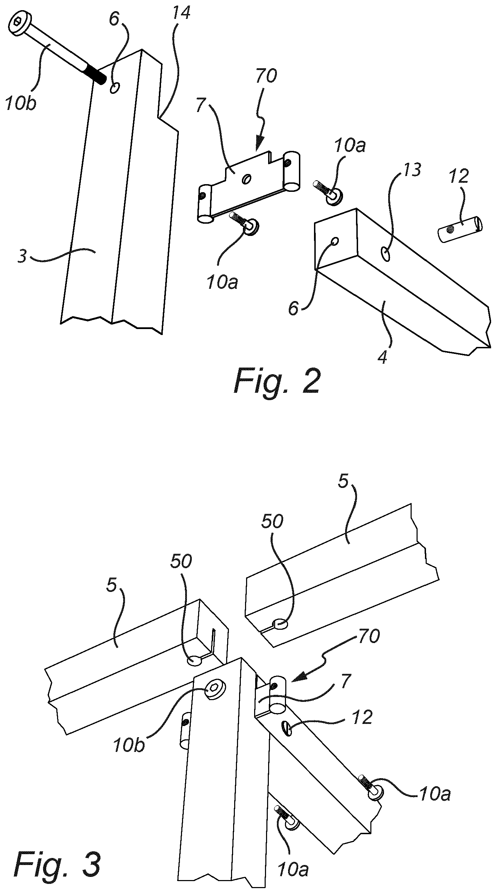

According to one embodiment of the present invention, the first joist has a cut out matching the second joist for receiving and supporting the second joist when mounted. This provides for a robust arrangement. One alternative thereof is shown in fig. 2.

According to yet another embodiment, the main body of the main part of the corner fitting unit may have a flat shape extending from said at least one end fixation portion and match the shape of the end of the second joist. Moreover, according to yet another embodiment, the multifunctional and detachable modular framing unit is a middle section and wherein said corner fitting unit is a middle corner fitting unit having two end fixation portions and wherein the main body of the main part of the corner fitting unit is positioned between and extending into the two end fixation portions, such that the middle corner fitting unit (70a) holds one first joist (3), one second joist (4) and two of the third joist (5) perpendicular to each other. One alternative is shown in fig. 3.

According to yet another embodiment, the multifunctional and detachable modular framing unit is an end section and wherein said corner fitting unit is an end corner fitting unit having only one end fixation portion, such that the end corner fitting unit (70b) holds one first joist (3), one second joist (4) and one third joist (5) perpendicular to each other. One alternative is shown in fig. 5.

Regardless of whether the corner fitting unit is a middle corner fitting unit or an end corner fitting unit, the corner fitting unit is integrated in between the first, second and thirds joist, making the detachable modular framing unit according to the present invention both easy and convenient to use. The present invention therefore provides a rigid solution where the corner fitting unit does not take up unnecessary extra space, and is not visible when mounted. When mounted, the corner fitting unit is fixated in the cut out of the first joust. The corner fitting unit is kept in place in a safe way and with easy means.

According to yet another embodiment, the framework is used in a repetitive way with 12 joists and 8 corner fittings to provide for cubic multifunctional and detachable modular framing units. Several cubic multifunctional and detachable modular framing units may be connected/disconnected to/from each other, as discussed more in detail below. What should be understood from above is that the first, second and third joist may be in different lengths. It is due to the pre-drilled holes of the joists, which are always the same, independent of the lengths of the joists, that enables the repetitive framework.

The multifunctional and detachable module framing unit according to the present invention is particularly suitable for use in kitchen, bathroom or storage installations.

Moreover, according to yet another embodiment, the pre-drilled holes of the first joist are used to mount additional joists to the framework which can hold shelfs and drawers. The excessive amount of pre-drilled holes enables for different opportunities to place the shelves and drawers, depending on the users' desire or need.

According to another embodiment, the pre-drilled holes of the first joist may be used to mount a removable cover of textile or wood along the side of the framework. As a part of the sustainable and circular concept, preferably an environmentally friendly textile or more preferably recycled textile, can be used as a divider in the inner space between the modules. Wood and other exclusive and durable material is preferably chosen where needed, such as the framework.

According to yet another embodiment, the material of the framework may be wood, preferably Swedish pinewood or any other environmental sustainable sort of wood. The choice of material is an important aspect in order to ensure minimal environmental impact. However, in order to ensure high quality and re-utilization, the chosen material must also be durable and sustainable.

According to another embodiment, a removable horizontal top and/or bottom plate may be mounted onto the multifunctional and detachable modular framing unit. According to another embodiment, there is also a removable plate which may be mounted vertically onto the framework as a front door and/or as a backside of the multifunctional and detachable modular framing unit. The idea with the double functionality of the horizontal top and/or bottom plate and the front door and/or backside is to facilitate for re-use of components in case of a reconstruction. The top and/or bottom plate and front door and/or backside preferably has a thickness of at least 10 mm but maximum a thickness of 16 mm. The front door and/or backside may have handles in the form of cavities. The handles are preferably centrally located.

Other benefits with the present invention is that, the design also makes it possible to change the place of modules within the system which makes it possible to distribute the wear and thus extend the life of the product.

Moreover, as the modules are easy to assemble and disassemble, the system is also easier to transport than current solutions. This reduces shipping volumes, but it also increases the chances of the product being used in a new location instead of being torn up and thrown away.

Also, the modules are designed in a way that makes it possible to manufacture each module from one single material. That quality in combination with ease of disassemble supports material reuse and that is a very important part of a functioning circular economy.

Also, the modules in the system are meant to have common dimensions so that larger broken parts can be used to make smaller ones. It is a good way to enable reuse within the system. That type of reuse is possible because the construction is made of solid wood, the material does not lose its technical properties if we break it down into smaller parts.

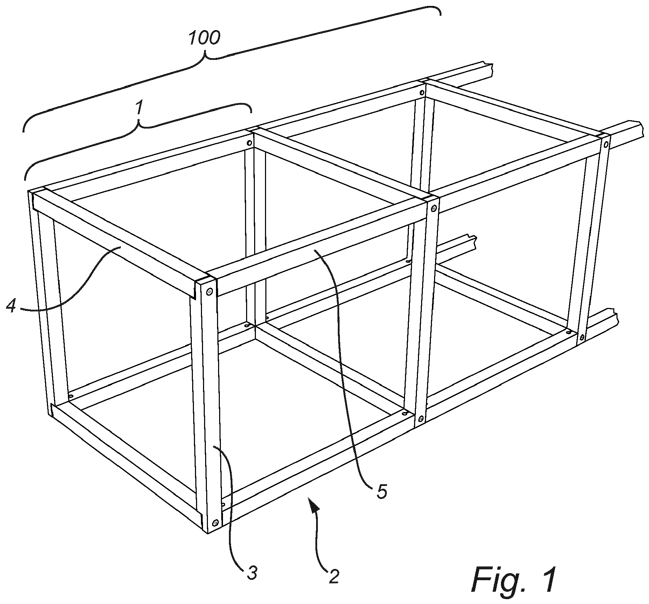

The present invention also provides a multifunctional and detachable storage module comprising several multifunctional and detachable modular framing units with frameworks connected to each other in a repetitive way. One alternative for this is presented in fig. 1. Moreover, this arrangement may be used as the foundation for a kitchen installation. The arrangement enables for integration of appliances such as a refrigerator, freezer, oven and/or sink.

### Description of the drawings

In fig. 1 there is shown a multifunctional and detachable modular framing unit 1 in a multifunctional and detachable storage module 100 according to one embodiment of the present invention. Fig. 1 is a conceptual figure. The modular framing unit 1 comprises a framework 2 comprising a first joist 3, a second joist 4 and a third joist 5, all of different types according to the present invention.

In fig. 2 and 3 there is shown one embodiment of the present invention. The first joist 3 and second joist 4 have joist holes 6 provided for fastening. Moreover, the modular framing unit 1 comprises a corner fitting unit 70 enabling connection fastening of the first joist 3, second joist 4 and third joist 5 to each other. The corner fitting unit 70 comprises a main part 7 which has a main body 11 comprising a corner fitting unit hole 80b (see fig. 4) for fixation of the main part 7 between the first joist 3 and second joist 4 by means of a screw 10b. The corner fitting unit 70 also comprises a separate locking unit 12 intended to be inserted into a pre-drilled hole 13 of the second joist 4 (see fig. 2). In this case the separate locking unit 12 has a hole matching the screw 10b to be locked into the same. Furthermore, the main part 7 has at least one end fixation portion 9, in this case two end fixation portions 9a, 9b directly connectable into the third joist 5. Both fixation portions 9a, 9b comprise one dowel 8 each, said dowels 8 matching one cut out hole 50 each in opposite third joists 5. As such, these third joists 5 are connected with the first 3 and second joist 4 (see fig. 3 and 4).

Moreover, in this case, the first joist 3 has a cut out 14 matching the second joist 4 for receiving and supporting the second joist 4 when mounted (see fig. 2).

In figs. 4 and 5 there are shown two different corner fitting units 70a and 70b according to the present invention. 70a shows a middle corner fitting unit and 70b shows an end corner fitting unit 70b. In fig. 4, the main part 7 with its main body 11 are shown, as well as dowels 8 with two end fixation portions 9a, 9b and a corner fitting unit hole 80b in the middle and two dowel corner fitting unit holes 80a. This middle corner fitting unit 70a is used when the multifunctional and detachable modular framing unit 1 is a middle section. The middle corner fitting unit 70a is also used when the multifunctional and detachable modular framing unit is an end section, but in the corner that is connected to another modular framing unit, i.e. not in the free end. (see fig. 3). The dowel corner fitting unit holes 80a provide for a better fixation by means of screws (see fig. 5).

In fig. 5 there is shown a corresponding corner fitting unit 70 according to one embodiment of the present invention and in the form of an end corner fitting unit 70b having only one end fixation portion 9c. This end corner fitting unit 70b is used in the ending/free corner of the multifunctional and detachable modular framing unit when the wherein the multifunctional and detachable modular framing unit 1 is an end section (see fig. 6).

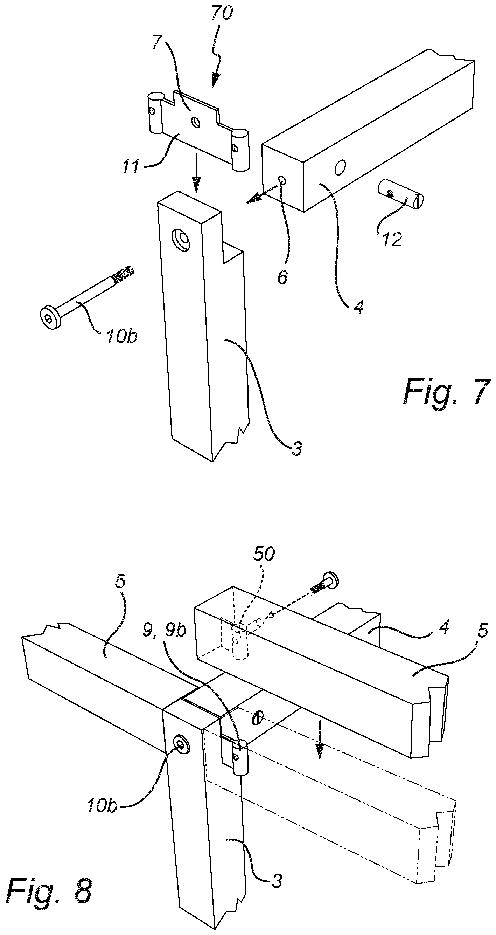

In figs. 7 and 8 there are shown a possible mounting sequence for one multifunctional and detachable modular framing unit 1 according to one embodiment of the present invention. A possible fastening of the first joist 3, second joist 4 and third joist 5 with the use of a corner fitting unit 70 is shown.

In fig. 1 there is shown at least a part of a multifunctional and detachable storage module 100 according to one embodiment of the present invention.

It should be noted that the embodiments presented in the drawings should only be seen as embodiments. The scope of the present invention and possible alternatives should be interpreted by viewing the claims.

## Claims

1. A multifunctional and detachable modular framing unit (1), said modular framing unit (1) comprising a framework (2) comprising a first joist (3), a second joist (4) and a third joist (5), wherein the first joist (3), second joist (4) and third joist (5) have joist holes (6), and wherein the modular framing unit (1) also comprises a corner fitting unit (70) enabling connection fastening of the first joist (3), second joist (4) and third joist (5) to each other, said corner fitting unit (70) comprising a main part (7), said main part (7) of the corner fitting unit (70) having a main body (11) comprising a corner fitting unit hole (80b) for fixation of said main part (7) between the first joist (3) and second joist (4) by means of a screw (10b) and a separate locking unit (12) intended to be inserted into a pre-drilled hole (13) of the second joist (4), preferably the separate locking unit (12) has a hole matching the screw (10b) to be locked into the same, said main part (7) having at least one end fixation portion (9) directly connectable into the third joist (5), said fixation portion (9) comprising a dowel (8) matching a cut out hole (50) in the third joist (5) to enable connection with the first (3) and second joist (4).

2. The multifunctional and detachable modular framing unit (1) according to claim 1, wherein the end fixation portion (9) of the main part (7) of corner fitting unit (70) has a dowel (8) with a cubic, cuboid, prism, pyramid, cone shape, or preferably cylindrical shape.

3. The multifunctional and detachable modular framing unit (1) according to claim 1 or 2, wherein the first joist (3) has a cut out (14) matching the second joist (4) for receiving and supporting the second joist (4) when mounted.

4. The multifunctional and detachable modular framing unit (1) according to any of claims 1-3, wherein the main body (11) of the main part (7) of the corner fitting unit (70) has a flat shape extending from said at least one end fixation portion (9).

5. The multifunctional and detachable modular framing unit (1) according to any of claims 1-4, wherein the multifunctional and detachable modular framing unit (1) is a middle section and wherein said corner fitting unit (70) is a middle corner fitting unit (70a) having two end fixation portions (9a, 9b) and wherein the main body (11) of the main part (7) of the corner fitting unit (70a) is positioned between and extending into the two end fixation portions (9a, 9b), such that the middle corner fitting unit (70a) holds one first joist (3), one second joist (4) and two of the third joist (5) perpendicular to each other.

6. The multifunctional and detachable modular framing unit (1) according to any of claims 1-4, wherein the multifunctional and detachable modular framing unit (1) is an end section and wherein said corner fitting unit (70) is an end corner fitting unit (70b) having only one end fixation portion (9c), such that the end corner fitting unit (70b) holds one first joist (3), one second joist (4) and one third joist (5) perpendicular to each other.

7. The multifunctional and detachable modular framing unit (1) according to any of claims 1-6, wherein each dowel (8) comprises a dowel corner fitting unit hole (80a).

8. The multifunctional and detachable modular framing unit (1) according to any of the preceding claims, wherein the framework (2) is used in a repetitive way with 12 joists and 8 corner fittings to provide for cubic multifunctional and detachable modular framing units (1).

9. The multifunctional and detachable modular framing unit (1) according to any of the preceding claims, wherein pre-drilled holes of the first joist (3) are used to mount additional joists to the framework which can hold shelfs and drawers.

10. The multifunctional and detachable modular framing unit (1) according to any of the preceding claims, wherein pre-drilled holes of the first joist (3) are used to mount a removable cover of textile or wood along the side of the framework.

11. The multifunctional and detachable modular framing unit (1) according to any of claims 8-10, wherein a removable horizontal top and/or bottom plate is mounted onto the multifunctional and detachable modular framing unit (1), preferably wherein a removable plate is mounted vertically onto the framework (2) as a front door and/or as a backside of the multifunctional and detachable modular framing unit (1).

12. The multifunctional and detachable modular framing unit (1) according to claim 1, wherein the joist holes (6) are pre-drilled holes provided for fastening the corner fitting unit between the first joist (3), second (4) and third joist (5) by means of the screw (10b) and a screw (10a).

13. A multifunctional and detachable storage module (100) comprising several multifunctional and detachable modular framing units (1) according to any of claims 1-12 with frameworks (2) connected to each other in a repetitive way.
